# EUROPEAN PATENT APPLICATION

(11) **EP 4 641 545 A1**
(43) Date of publication of application: **29.10.2025**
(21) Application number: 23907445.3
(22) Date of filing: 20.11.2023
(51) Int. Cl.: G09B 21/00, G09B 21/04

(54) **INTERACTIVE INFORMATION PROCESSING DEVICE AND METHOD**

(30) Priority: 21.12.2022 KR 20220180933; 23.06.2023 KR 20230081213
(71) Applicant: DOT INCORPORATION, Seoul 08507 (KR)
(72) Inventor: KIM, Ju Yoon, Gimpo-si, Gyeonggi-do 10048 (KR); KIM, Ji Ho, Gimpo-si, Gyeonggi-do 10048 (KR); PARK, Hyeon Cheol, Gwangmyeong-si, Gyeonggi-do 14295 (KR)
(74) Representative: AWA Sweden AB
(86) International application number: PCT/KR2023/018686
(87) International publication number: WO 2024/136159

(57) **Abstract**

Provided are an interactive information processing device and method. The interactive information processing method includes outputting interactive information compatible with an information output device that outputs tactile information in a first region divided into a plurality of grid cells configuring a user interface screen through an upward drive or a downward drive for at least one information output section, detecting coordinate information of a grid cell corresponding to the interactive information output in the first region, detecting coordinate information of an information output cell that is a one-to-one match to the coordinate information of the grid cell, and generating and transmitting a drive signal for the information output section corresponding to the coordinate information of the information output cell to the information output device.

## Description

### TECHNICAL FIELD

The present disclosure relates to an interactive information processing device and method.

### BACKGROUND ART

Users may perceive information in a variety of ways. For this purpose, various types of information output devices have been used. For example, visual information output devices using printed materials, auditory information output devices using sound, tactile information output devices using Braille, and the like have been used.

In particular, in the case of a tactile information output device using Braille, since the information that may be output is limited, an information processing device capable of processing various graphical information such as graphs, diagrams, equations, etc. and transmitting them to the information output device is required.

The foregoing background technology is technical information that the inventor possessed in order to derive the present disclosure, or acquired in the process of deriving the disclosure, and is not necessarily known to the general public prior to the filing of the present application.

### DISCLOSURE

### TECHNICAL PROBLEM

An objective of the present disclosure is to provide an interactive information processing device and method of processing graphical information and transmitting the processed graphical information to a tactile information output device so that the graphical information may be perceived through the tactile information output device.

An objective of the present disclosure is not limited to the objective mentioned above, and other objectives and advantages of the present disclosure not mentioned may be understood from the following description, and will be more clearly understood from the embodiments of the present disclosure. It will also be appreciated that the objectives and advantages of the present disclosure may be realized by the means and combinations thereof set forth in the claims.

### TECHNICAL SOLUTION

In an aspect of the present disclosure, an interactive information processing method performed by a processor of an interactive information processing device, the interactive information processing method including: outputting interactive information compatible with an information output device that outputs tactile information in a first region divided into a plurality of grid cells configuring a user interface screen through an upward drive or a downward drive for at least one information output section; detecting coordinate information of a grid cell corresponding to the interactive information output in the first region; detecting coordinate information of an information output cell that is a one-to-one match to the coordinate information of the grid cell; and generating and transmitting a drive signal for the information output section corresponding to the coordinate information of the information output cell to the information output device.

In another aspect of the present disclosure, an interactive information processing device includes: a processor; and a memory operably coupled to the processor and storing at least one code executable by the processor, the code being configured to, when executed by the processor, cause the processor to: output interactive information compatible with an information output device that outputs tactile information in a first region divided into a plurality of grid cells configuring a user interface screen through an upward drive or a downward drive for at least one information output section; detect coordinate information of a grid cell corresponding to the interactive information output in the first region; detect coordinate information of an information output cell that is a one-to-one match to the coordinate information of the grid cell; and generate and transmit a drive signal for the information output section corresponding to the coordinate information of the information output cell to the information output device.

In a further aspect of the present disclosure, for implementing the present disclosure, other methods, other systems, and a computer-readable recording medium on which a computer program for executing the above methods is stored may be provided.

In addition to the foregoing, other aspects, features, and advantages will become apparent from the following drawings, claims, and detailed description of the disclosure.

### ADVANTAGEOUS EFFECTS

According to the present disclosure, the interactive information processing device and method processes graphical information and transmits the processed graphical information to the tactile information output device so that the graphical information may be perceived through the tactile information output device.

The effects of the present disclosure are not limited to that mentioned above, and other effects not mentioned will be clearly understood by those skilled in the art from the following description.

### DESCRIPTION OF DRAWINGS

FIG. 1 is an illustration of an interactive information processing environment according to an embodiment;
FIG. 2 is a schematic block diagram illustrating a configuration of an interactive information processing device according to an embodiment;
FIGS. 3 to 7 are illustrations of a user interface screen displayed on the interactive information processing device of FIG. 2;
FIGS. 8 to 10 are illustrations of an information output device included in the interactive information processing environment according to an embodiment; and
FIG. 11 is a flow diagram illustrating an interactive information processing method according to an embodiment.

### BEST MODE FOR INVENTION

A WPS generation method according to an embodiment of the present invention is performed by a processor of a WPS(Welding Procedure Specification) generation device, and is a method of automatically generating a WPS using a machine learning algorithm, wherein a WPS transmission request signal together with welding-related information including a welding material and a thickness of the welding material for a welding target, The advantages and features of the present disclosure, and methods of achieving them, will become apparent with reference to the embodiments described in detail in conjunction with the accompanying drawings. It should be understood, however, that the disclosure is not limited to the embodiments set forth below, but may be embodied in many different forms and includes all modifications, equivalents, or substitutions that are within the spirit and scope of the present disclosure. The embodiments set forth below are provided to make the disclosure complete and to give those of ordinary skill in the art to which the disclosure belongs a complete idea of the scope of the disclosure. In describing the present disclosure, detailed descriptions of related art will be omitted where it is believed that such descriptions would obscure the essence of the disclosure.

The terms used herein are intended to merely describe particular embodiments, but not to limit the disclosure. Expressions in the singular include the plural unless the context clearly indicates otherwise. It should be understood that as used herein, the terms "including" or "having" and the like are intended to designate the presence of the features, numbers, steps, actions, components, parts, or combinations thereof described herein, but not to preclude the possibility of the presence or addition of one or more other features, numbers, steps, actions, components, parts, or combinations thereof. Terms first, second, and the like may be used to describe various components, but the components are not to be limited by such terms. These terms are used solely for the purpose of distinguishing one component from another.

Further, as used herein, a "part" may be a hardware component, such as a processor or circuit, and/or a software component executed by a hardware component, such as a processor.

Embodiments according to the present disclosure will now be described in detail with reference to the accompanying drawings, wherein identical or corresponding components are given the same reference signs and duplicate descriptions thereof will be omitted.

In the following embodiments, the terms first, second, etc. are not intended to be limiting, but are used to distinguish one component from another.

In the following embodiments, expressions of the singular include the plural unless the context clearly indicates otherwise.

In the following embodiments, terms including or having are intended to imply the presence of the features or components described, but not to preclude the possibility of the presence or addition of one or more other feature or components.

A particular sequence of processes may be performed in a different order than that described when an embodiment is otherwise practicable. For example, two processes described in succession may be performed substantially simultaneously, or may be performed in the opposite order from that described.

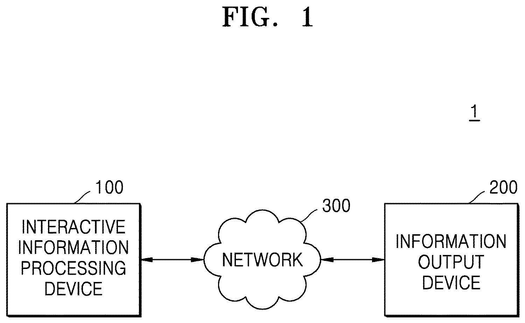

FIG. 1 is an illustration of an interactive information processing environment according to an embodiment of the present disclosure. Referring to FIG. 1, the interactive information processing environment 1 may include an interactive information processing device 100, an information output device 200, and a network 300.

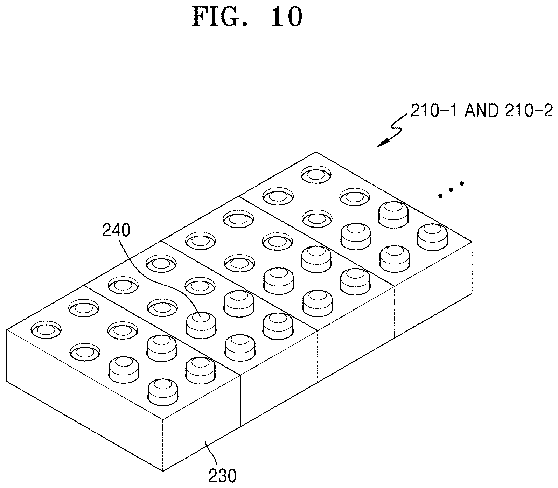

The interactive information processing device 100 may generate and transmit interactive information to the information output device 200. In this embodiment, the information output device 200 may include electronics for outputting tactile information via an upward drive or a downward drive of at least one information output section (240 in FIG. 10).

The interactive information processing device 100 may be information-compatible with the information output device 200. Here, the term 'information-compatible' may include the meaning that the interactive information processing device 100 stores the specification information and drive information of the information output device 200, so that the interactive information processing device 100 may generate interactive information based on the specification information and drive information of the information output device 200 and transmit the interactive information to the information output device 200, and the information output device 200 may output the interactive information received from the interactive information processing device 100 without any additional configuration. In an optional embodiment, the term 'information-compatible' may also include meaning that the tactile information output to the information output device 200 is transmitted to the interactive information processing device 100, so that the interactive information processing device 100 may output the tactile information as visual information.

In this embodiment, the term 'interactive information' may include a subset of information processed to convert visual information output to the interactive information processing device 100 into tactile information to the information output device 200. In this embodiment, the visual information output to the interactive information processing device 100 may also be included in the interactive information.

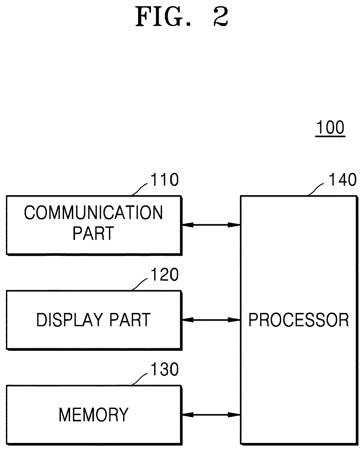

In this embodiment, the interactive information may specifically include one or more files previously stored in memory (130 in FIG. 2), such as files previously created in the first region and stored in memory, and files captured in the first region and stored in memory. The interactive information may also include files received via communication with an external device (e.g., a server, a user terminal, etc.).

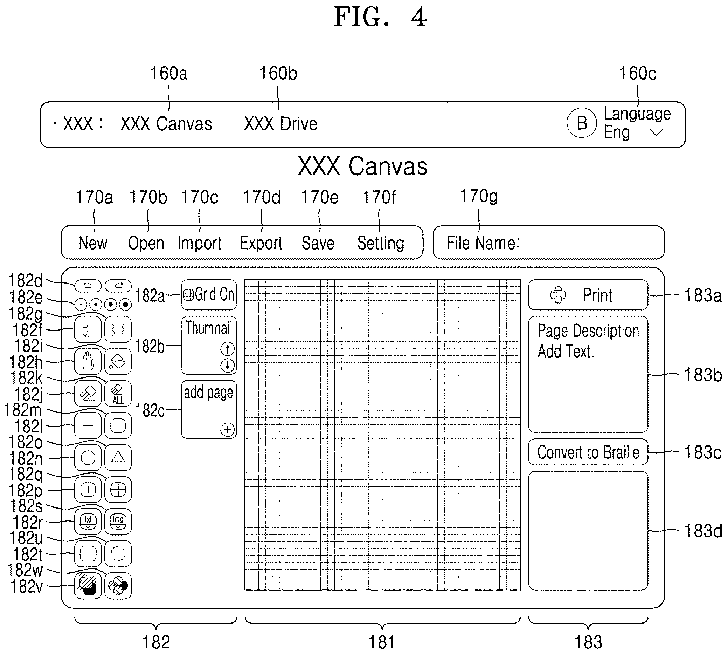

Further, the interactive information may include a touch input generated by a real-time touch of the first region (181 in FIG. 4). Further, the interactive information may include a set of touch inputs generated by a touch of the first region until a touch signal for a print button (183a in FIG. 4) embodied in a third region (183 in FIG. 4) at a location different from the first region is received. Such interactive information may include one or more of graphical information and textual information.

In this example, the specification information of the information output device 200 may include, for example, the number and size of information output regions, the number of information output sections included in the information output regions, the configuration and description of the user interface buttons, and the like. In addition, the driving information of the information output device 200 may include, for example, an operating power source, signals for upward operations or downward operations of the information output sections, and a communication method with the interactive information processing device 100. In an optional embodiment, the interactive information processing device 100 may receive specification information and drive information of the information output device 200 through communication with the information output device 200 and store the information in memory.

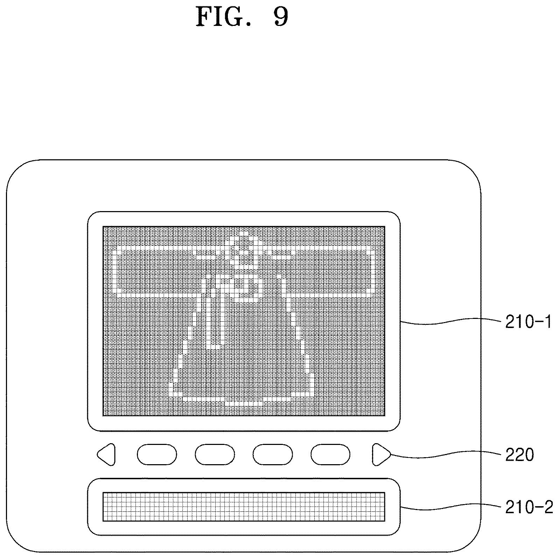

It may be seen from the specification information and drive information of the information output device 200 that in an embodiment, the information output device 200 is configured with a first information output region (210-1 in FIG. 9) and a second information output region (210-2 in FIG. 9) at a different location from the first information output region. The interactive information processing device 100 may generate drive signals for the information output sections to output graphical information in the first information output region, drive signals for the information output sections to output textual information in the second information output region, and transmit the drive signals to the information output device 200.

In this embodiment, the interactive information processing device 100 may exist independently in the form of a server, or the interactive information processing device 100 may implement the information processing function in the form of an application or software, which may be mounted on a user terminal (not shown).

Here, the user terminal may include a communication terminal capable of performing the functions of a computing device (not shown), and may include, but is not limited to, a user-operated desktop computer, smartphone laptop, tablet PC, smart TV, cell phone, personal digital assistant (PDA), media player, micro server, global positioning system (GPS) device, e-book device, digital broadcasting device, navigation, kiosk, MP3 player, digital camera, home appliance, and other mobile or non-mobile computing device. Such user devices are not limited to those described above, and any device capable of web browsing may be employed without limitation.

The information output device 200 may receive a drive signal for the information output section from the interactive information processing device 100 and output predetermined information to the information output region. In other words, the information output device 200 may be an electronic device capable of outputting Braille-based information for a visually impaired user. For example, the information output device 200 may include a Braille watch, a Braille pad, or the like.

The network 300 may serve to connect the interactive information processing device 100 and the information output device 200. The network 300 may include, for example, a wired network, such as a local region network (LAN), wide region network (WAN), metropolitan region network (MAN), integrated service digital network (ISDN), or a wireless network, such as a wireless LAN (WLAN), code-division multiple access (CDMA), or satellite communication, but the scope of the present disclosure is not limited thereto. Further, the network 300 may transmit and receive information using short-range communication and/or long-range communication. Here, the short-range communication may include Bluetooth, radio frequency identification (RFID), infrared data association (IrDA), ultra-wideband (UWB), ZigBee, and Wi-Fi technologies, and the long-range communication may include code-division multiple access (CDMA), frequency-division multiple access (FDMA), time-division multiple access (TDMA), orthogonal frequency-division multiple access (OFDMA), and single carrier frequency-division multiple access (SC-FDMA) technologies.

The network 300 may include a connection of network elements such as hubs, bridges, routers, and switches. The network 300 may include one or more connected networks, such as a multi-network environment, including a public network, such as the Internet, and a private network, such as a secure corporate private network. Access to the network 300 may be provided via one or more wired or wireless access networks.

Furthermore, the network 300 may support communication technologies, such as controller region network (CAN) communications, vehicle to infrastructure (V2I) communications, vehicle to everything (V2X) communications, wireless access in vehicular environment (WAVE) communications, etc., Internet of Things (IoT) networks and/or 5G communications to exchange and process information between distributed components, such as objects.

FIG. 2 is a schematic block diagram illustrating the configuration of an interactive information processing device according to an embodiment. In the following description, portions of the description that duplicate the description of FIG. 1 will be omitted. Referring to FIG. 2, the interactive information processing device 100 may include a communication part 110, a display part 120, a memory 130, and a processor 140.

The communication part 110 may provide a communication interface required to deliver transmission/reception signals in the form of packet data between the information output device 200 and the network 300. Further, the communication part 110 may serve to receive predetermined information request signals from the information output device 200 and to transmit the information processed by the processor 140 to the information output device 200. Here, the communication interface may include a medium that serves to connect the interactive information processing device 100 and the information output device 200, such as a path that provides an access path for the information output device 200 to send and receive information after being connected to the interactive information processing device 100. The communication part 110 may also be a device that includes hardware and software necessary to transmit and receive signals, such as control signals or data signals, via wired or wireless connections with other network devices.

The display part 120 may output information associated with the operation of the interactive information processing device 100 as visual data, and may be embodied as a touch screen (not shown) by being layered or integrally formed with a touch sensor. Such a touch screen may function as a user input part that provides an input interface to a user.

The display part 120 may refer to a control panel capable of inputting and outputting information associated with the interactive information processing device 100, as well as being configured to display information associated with the interactive information processing device 100. The display part 120 may be, for example, a predetermined display member such as organic light emitting displays (OLEDs) or liquid crystal displays (LCDs) or light emitting displays (LEDs) capable of touch recognition.

The input interface provided to a user in this embodiment may further include a microphone (not shown) that is capable of inputting an audio signal. The microphone is an exemplary embodiment, the location and implementation method thereof are not limited, and input means for inputting audio signals may be employed without limitation. The touch screen is also an exemplary embodiment, and the location and implementation method thereof are not limited, and input means for inputting user request signals may be employed without limitation.

On the other hand, in this embodiment, the output interface may further include a speaker (not shown). The speaker may output information associated with the operation of the interactive information processing device 100 as auditory data. In other words, the speaker may output information associated with the operation of the interactive information processing device 100 as audio data, for example, notification messages such as warning sounds, notification sounds, error conditions, information corresponding to the user's voice command, processing results corresponding to the user's voice command, etc., under the control of the processor 140. The speaker may be an exemplary embodiment, and may include any output means for outputting audio signals, without limitation of the location and implementation method thereof.

The memory 130 may store codes that are associated with the processor 140 and, when executed by the processor 140, cause the processor 140 to support various functions of the interactive information processing device 100. That is, the memory 130 may store a number of applications (application programs or applications) running on the interactive information processing device 100, information and instructions for the operation of the interactive information processing device 100. At least some of these applications may be downloaded from an external server via wireless communication. Additionally, the memory 130 may store information about one or more users who wish to interact with the interactive information processing device 100. Such user information may include authorization information (e.g., facial and body shape information, voice information, etc.) that may be used to identify the recognized user.

Additionally, the memory 130 may store information about actions to be performed by the interactive information processing device 100 in response to voice commands from the user (e.g., commands to control the interactive information processing device 100).

In this embodiment, the memory 130 may perform a function of temporarily or permanently storing data processed by the processor 140. Here, the memory 130 may include magnetic storage media or flash storage media, but the scope of the present disclosure is not limited thereto. Such memory 130 may include internal memory and/or external memory, and may include volatile memory such as DRAM, SRAM, or SDRAM, non-volatile memory such as one time programmable ROM (OTPROM), PROM, EPROM, EEPROM, mask ROM, flash ROM, NAND flash memory, or NOR flash memory, flash drives such as SSDs, compact flash (CF) cards, SD cards, Micro-SD cards, Mini-SD cards, XD cards, or memory sticks, or storage devices such as HDDs.

The processor 140 is a type of central processing unit (CPU) that may control the overall operation of the interactive information processing device 100 by executing control software loaded in the memory 130. The processor 140 may refer to a hardware-embedded data processing device having, for example, physically structured circuits to perform functions expressed by codes or instructions included in a program. Examples of such hardware-embedded data processing devices may include, but are not limited to, processing devices such as a microprocessor, a central processing unit (CPU), a processor core, a multiprocessor, an application-specific integrated circuit (ASIC), a field programmable gate array (FPGA), and the like.

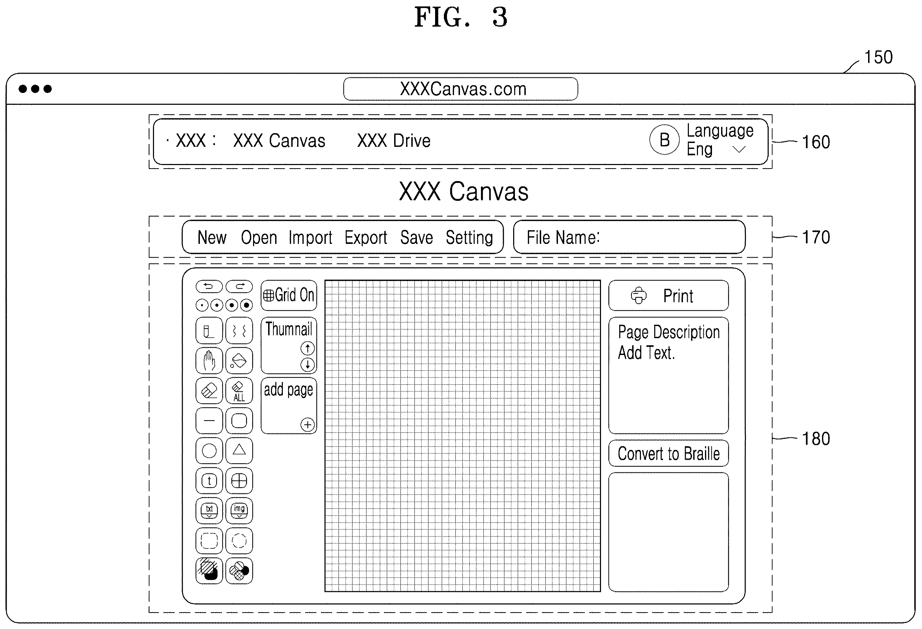

The processor 140 may output a user interface screen (150 in FIG. 3) to the display part 120. The processor 140 may generate and output response information corresponding to a user's touch on the user interface screen.

The processor 140 may output interactive information compatible with the information output device 200 in a first region (181 in FIG. 4) divided into a plurality of grid cells configuring the user interface screen.

The processor 140 may detect coordinate information of a grid cell corresponding to the interactive information output in the first region. Each of the plurality of grid cells configuring the first region may have coordinate information previously set, for example, from (1, 1) to (N, M), which may be stored in the memory 130.

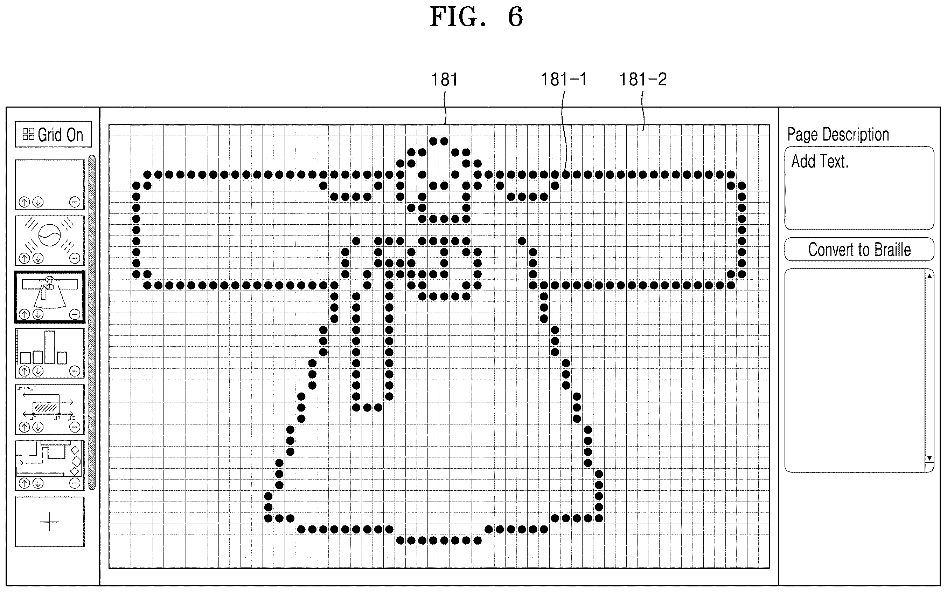

When interactive information is output in the first region, grid cells of the first region may be categorized into grid cells (e.g., 181-1 in FIG. 6) displaying meaningful information and grid cells (e.g., 181-2 in FIG. 6) displaying non-meaningful information. The processor 140 may detect coordinate information of the grid cells displaying meaningful information and of the grid cells displaying meaningless information.

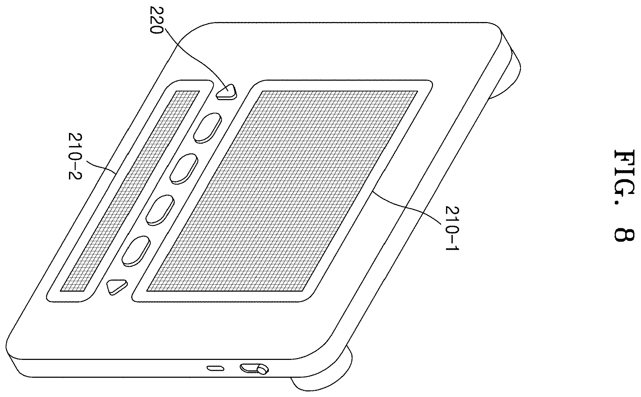

The processor 140 may detect coordinate information of the information output cell (230 in FIG. 10) that is a one-to-one match to the coordinate information of the grid cell. Here, one-to-one matching may mean that the number of grid cells configuring the first region (181 in FIG. 4) and the number of information output cells configuring the information output regions (210-1 and 210-2 in FIG. 8) included in the information output device 200 are identical. That is, the coordinate information of the grid cells and the coordinate information of the information output cells may be identical.

However, it is not necessary that the coordinate information of the grid cells and the coordinate information of the information output cells are identical, and the coordinate information of the grid cells and the coordinate information of the information output cells may be different. If the coordinate information of the grid cells and the coordinate information of the information output cells are different, the coordinate information of the grid cells and the coordinate information of the information output cells that matches the coordinate information of the grid cell may be stored in the memory 130 in the tabulated form.

The processor 140 may detect the coordinate information of the information output cell that matches the coordinate information of the grid cell that displays meaningful information. The processor 140 may also detect the coordinate information of the information output cell that matches the coordinate information of the grid cell that displays non-meaningful information. Here, the coordinate information of the information output cell that matches the coordinate information of the grid cell that displays the meaningful information is assumed to be the first coordinate information of the information output cell, and the coordinate information of the information output cell that matches the coordinate information of the grid cell that displays the meaningful information is assumed to be the second coordinate information of the information output cell.

The processor 140 may generate a drive signal for an information output section corresponding to the coordinate information of an information output cell and transmit the drive signal to the information output device 200. The processor 140 may generate an upward drive signal for an information output section corresponding to the first coordinate information of an information output cell and a downward drive signal for an information output section corresponding to the second coordinate information of an information output cell. The processor 140 may transmit the upward drive signal or the downward drive signal, together with the first coordinate information or the second coordinate information corresponding to the upward or downward drive signal, respectively, to the information output device 200.

In an embodiment, the processor 140 may receive a touch of a grid cell display menu (182a in FIG. 4) embodied in a second region (182 in FIG. 4) at a location different from the first region that configures the user interface screen before outputting interactive information in the first region. The processor 140 may display a plurality of grid cells in the first region in response to the reception of a first touch signal for the grid cell display menu, and may terminate the display of the plurality of grid cells from the first region in response to the reception of a second touch signal for the grid cell display menu.

In an embodiment, the processor 140 may activate a page description window (183b in FIG. 4) in response to the reception of a touch signal for the page description window embodied in a third region (183 in FIG. 4) at a location different from the first region configuring the user interface screen. The processor 140 may receive input of descriptive text for the interactive information output in the first region from the page description window. In response to the reception of a touch signal for a Braille conversion menu (183c in FIG. 4) embodied at a location different from the page description window in the third region, the processor 140 may determine the completion of reception of the descriptive text and may convert the descriptive text into Braille. The processor 140 may display the result of descriptive text converted into Braille on a Braille output window (183d in FIG. 4) embodied at a location different from the Braille conversion menu in the third region. The processor 140 may transmit the Braille converted result displayed on the Braille output window to the information output device 200.

In this embodiment, the processor 140 may generate and transmit a drive signal for an information output section to the information output device 200 to cause the Braille converted result to be output in a second information output region (210-2 in FIG. 9) of the information output device 200. In another embodiment, the processor 140 may generate and transmit a drive signal for an information output section to cause graphical information to be output in a first information output region (210-1 in FIG. 9) and the Braille converted result to be output in the second information output region (210-2 in FIG. 9) of the information output device 200. In a still another embodiment, the processor 140 may generate and transmit to the information output device 200 a drive signal for the information output section to cause the output of the graphic information from the first information output region to be terminated, and the Braille converted result to be output when a preset time (e.g., 10 seconds) has elapsed after the graphic information is output in the first information output region.

FIGS. 3 to 5 are illustrations of a user interface screen displayed on the interactive information processing device of FIG. 2. In the following description, portions of the description that are redundant with the description with respect to FIGS. 1 and 2 will be omitted. Referring to FIGS. 3 to 7, the processor 140 may perform generation and control of response information in response to a user's touch on the user interface screen.

The user interface screen 150 illustrated in FIGS. 3 to 5 may include a first user interface region 160, a second user interface region 170, and a third user interface region 180.

The first user interface region 160 may include first (1-1) to third (1-3) UI menus 160a to 160c. Upon receiving a touch signal for the first UI menu 160a, the processor 140 may move the currently displayed user interface screen on the display part 120 to a canvas page. Upon receiving a touch signal for the second UI menu 160b, the processor 140 may move the currently displayed user interface screen on the display part 120 to a drive page. Upon receiving a touch signal for the third UI menu 160c, the processor 140 may change the language of the currently displayed user interface screen on the display part 120 to English or Korean.

The second user interface region 170 may include first (2-1) to seventh (2-7) UI menus 170a to 170g. Upon receiving a touch signal for the first UI menu 170a, New, the processor 140 may generate a new document tracking management system (DTMS) document. Here, the DTMS may include file extensions of document files generated by the interactive information processing device (100). Upon receiving a touch signal for the second UI menu 170b, Open, the processor 140 may open an existing DTMS document. Upon receiving a touch signal for the third UI menu 170c, Import, the processor 140 may insert a DTMS document. Upon receiving a touch signal for the fourth UI menu 170d, Export, the processor 140 may save the DTMS file to a specified local location, for example, to a specified location on a device (not shown) on which the interactive information processing device 100 is implemented, or to a specified location on an external device connected to the interactive information processing device 100. Upon receiving a touch signal for the fifth UI menu 170e, Save, the processor 140 may save the DTMS document. Upon receiving a touch signal for the sixth UI menu 170f, Setting, the processor 140 may generate a translation engine language. Upon receiving a touch signal for the seventh UI menu 170g, File Name, the processor 140 may enable file name input.

The third user interface region 180 may include a first sub-region 181, a second sub-region 182, and a third sub-region 183. The first sub-region 181 may display the interactive information described above. The processor 140 may cause the graphical information and/or textual information to be output by touch on the first sub-region 181. The processor 140 may cause the graphical information and/or textual information included in the file to be output by opening a file on the first sub-region 181.

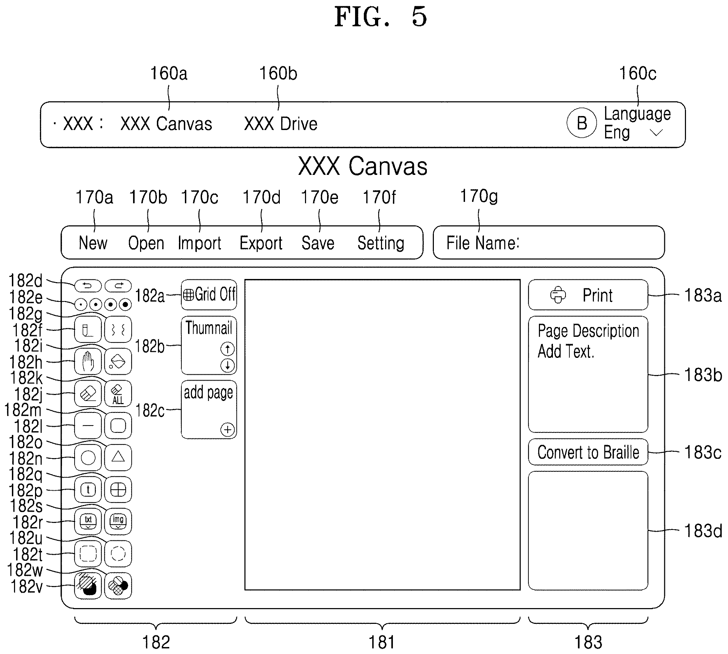

Referring to FIG. 4, a plurality of grid cells may be displayed on the first sub-region 181 and the display of the plurality of grid cells may be terminated in response to a touch for a grid cell display menu 182a provided in the second sub-region 182. Upon receiving a first touch signal for the grid cell display menu 182a, the processor 140 may display the plurality of grid cells in the first sub-region 181 as illustrated in FIG. 4. Upon receiving a second touch signal for the grid cell display menu 182a, the processor 140 may terminate the display of the plurality of grid cells from the first sub-region 181, as illustrated in FIG. 5.

The second sub-region 182 may be provided with a plurality of menus 182a to 182v, and a touch for any of the menus may result in different interaction information being output in the first sub-region 181. Upon receiving a touch signal for the grid cell display menu 182a, the processor 140 may display the plurality of grid cells in the first sub-region 181 and/or terminate the display of the plurality of grid cells from the first sub-region 181.

Upon receiving a touch signal for the page panning menu 182b, the processor 140 may move files in thumbnail (page) units. Upon receiving a touch signal for the up arrow, the processor 140 may move a file upward. Upon receiving a touch signal for the down arrow, the processor 140 may move a file downward.

Upon receiving a touch signal for the add page menu 182c, the processor 140 may add a new page to the underlying page.

Upon receiving a touch signal for the Undo/Redo menu 182d, the processor 140 may undo the touch input of the first sub-region 181, or redo the touch input.

Upon receiving a touch signal for the thickness setting menu 182e, the processor 140 may vary the thickness of the information displayed by a touch on the first sub-region 181. When the leftmost thickness setting menu is touched, the thickness of the information displayed by a touch on the first sub-region 181 may be the thinnest, and when the rightmost thickness setting menu is touched, the thickness of the information displayed by a touch on the first sub-region 181 may be the thickest. The thinnest thickness may mean, for example, that the information is displayed up to 1/2 grid cell by a single touch on the first sub-region 181, without limitation. Also, the thickest thickness may mean, for example, that the information is displayed up to 3 grid cells by a single touch on the first sub-region 181, without limitation.

Upon receiving a touch signal for the pen menu 182f, the processor 140 may activate the pen and enable the display of the user input information on the first sub-region 181 in response to a click-and-drag operation.

Upon receiving a touch signal for the symmetrical drawing menu 182g, the processor 140 may activate the menu and enable mirroring display of the user input information on the first sub-region 181 in response to a click-and-drag operation.

Upon receiving a touch signal for the panning menu 182h, the processor 140 may activate the menu and enable the screen panning on the first sub-region 181 in response to a click-and-drag operation.

Upon receiving a touch signal for the fill menu 182i, the processor 140 may activate the menu and fill the clicked grid cell with a set color on the first sub-region 181 in response to a click operation.

Upon receiving a touch signal for the eraser menu 182j, the processor 140 may activate the menu and erase the displayed information on the first sub-region 181 in response to a click-and-drag operation.

Upon receiving a touch signal for the clear all menu 182k, the processor 140 may activate the menu and clear all displayed information on the first sub-region 181 in response to a click operation.

Upon receiving a touch signal for the line drawing menu 182I, the processor 140 may activate the menu and draw a line in the selected grid cell on the first sub-region 181 in response to a click-and-drag operation.

Upon receiving a touch signal for the rectangle menu 182m, the processor 140 may activate the menu and draw a rectangle in the selected grid cell on the first sub-region 181 in response to a click-and-drag operation.

Upon receiving a touch signal for the circle menu 182n, the processor 140 may activate the menu and draw a circle on the selected grid cell on the first sub-region 181 in response to a click-and-drag operation.

Upon receiving a touch signal for the triangle menu 182o, the processor 140 may activate the menu and draw a triangle on the selected grid cell on the first sub-region 181 in response to a click-and-drag operation.

Upon receiving a touch signal for the text input menu 182p, the processor 140 may activate the menu, pop up a text insertion window on the first sub-region 181, and in the event of the text input to the text insertion window, enable the text to be converted into Braille in real time and displayed.

Upon receiving a touch signal for the table drawing menu 182q, the processor 140 may activate the menu and draw a table on the first sub-region 181 in response to a click-and-drag operation.

Upon receiving a touch signal for the insert text menu 182r, the processor 140 may pop up a text file open window on the first sub-region 181 and enable the selected file to be converted into Braille in real time and displayed.

Upon receiving a touch signal for the insert image menu 182s, the processor 140 may pop up an insert image window on the first sub-region 181 and enable the selected image to be output in the first sub-region 181.

Upon receiving a touch signal for the rectangle selection menu 182t, the processor 140 may activate the menu and enable a rectangle to be selected on the first sub-region 181 in response to a click-and-drag operation.

Upon receiving a touch signal for the free selection menu 182u, the processor 140 may activate the menu and enable grid cells to be freely selected on the first sub-region 181 in response to a click-and-drag operation.

Upon receiving a touch signal for the color menu 182v, the processor 140 may display a color that is set upon left-clicking or right-clicking for the grid cells that displays the meaningful information output in the first sub-region 181.

Upon receiving a touch signal for the palette menu 182w, the processor 140 may set the touched color to be used.

The third sub-region 183 may be provided with a plurality of menus 183a to 183d. Upon receiving a touch signal for the print menu 183a, the processor 140 may transmit the interactive information printed on the first sub-region 181 to the information output device 200.

Upon receiving a touch signal for the page description menu 183b, the processor 140 may activate the page description window and enable descriptive text for the output interactive information to be input in the first sub-region 181.

Upon receiving a touch signal for the Braille conversion menu 183c, the processor 140 may convert the descriptive text input to the page description window into Braille, and display the Braille converted result in the page descriptive-Braille region 183d.

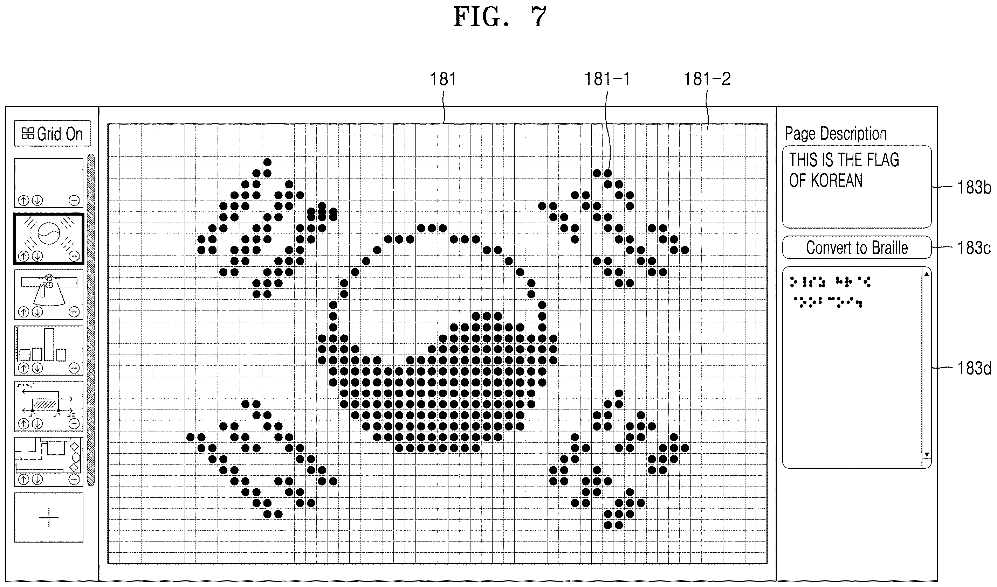

FIGS. 6 and 7 are illustrations of interactive information output in the third user interface region 180. In the following description, portions of the description that duplicate the description of FIGS. 1 to 5 will be omitted. Referring now to FIGS. 6 and 7, the processor 140 may generate and control response information in response to a user's touch on the third user interface region 180.

FIG. 6 illustrates interactive information output in the first sub-region 181 as the processor 140 moves a file in thumbnail (page) units in response to receiving a touch signal for the page panning menu 182b. In this embodiment, the interactive information may include Han-bok graphic information. On the first sub-region 181, the Han-bok may be represented by grid cells 181-1 displaying meaningful information and grid cells 181-2 displaying non-meaningful information.

FIG. 6 illustrates interactive information output in the first sub-region 181 as the processor 140 moves the file upward in response to receiving a touch signal for an up arrow of a page panning menu 182b. In this embodiment, the interactive information may include graphical information of a Korean flag. In this embodiment, the page description window shows a descriptive text for the interactive information output in the first sub-region 181, such as "This is the Korean flag.", and the page descriptive-braille region 183d shows an example of the Braille converted result for the descriptive text.

FIGS. 8 to 10 are illustrations of information output devices included in an interactive information processing environment according to an embodiment of the present disclosure. Referring to FIGS. 8 to 10, the information output device 200 may include a first information output region 210-1, a second information output region 210-2, and a plurality of user interfaces 220.

The first information output region 210-1 and the second information output region 210-2 may include a plurality of information output sections 240, which may output interactive information including at least one of graphical information and textual information in the form of Braille. In this embodiment, the size of the first information output region 210-1 may be larger than that of the second information output region 210-2.

In this embodiment, while the first information output region 210-1 may output graphical information and the second information output region 210-2 may output textual information, the present disclosure is not limited to above, and one of graphical information and textual information may be output in either of the first information output region 210-1 and the second information output region 210-2.

The plurality of user interfaces 220 may include a controller to operate the information output device 200. The controller may include sensors, buttons, or switch structures that may recognize user's touch or press operations.

FIG. 10 is a diagram illustrating the operation of information output cells 230 included in the first information output region 210-1 and the second information output region 210-2 in FIG. 1. Referring to FIG. 10, the first information output region 210-1 and the second information output region 210-2 may include a plurality of information output cells 230. Braille information output in the first information output region 210-1 and the second information output region 210-2 may be output in the units of information output cells 230 including information output sections 240 arranged in four rows by two columns, and in this embodiment, the information output cells 230 may include eight information output sections 240.

Although this embodiment specifies that the information output cell 230 includes eight information output sections 240, the present disclosure is not limited thereto, and the information output cell 230 may include 2-8 information output sections 240, and in some cases, more than eight information output sections 240.

The information output section 240 according to the present embodiment may output information through an upward drive or a downward drive in response to receiving a drive signal for the information output section from the interactive information processing device 100.

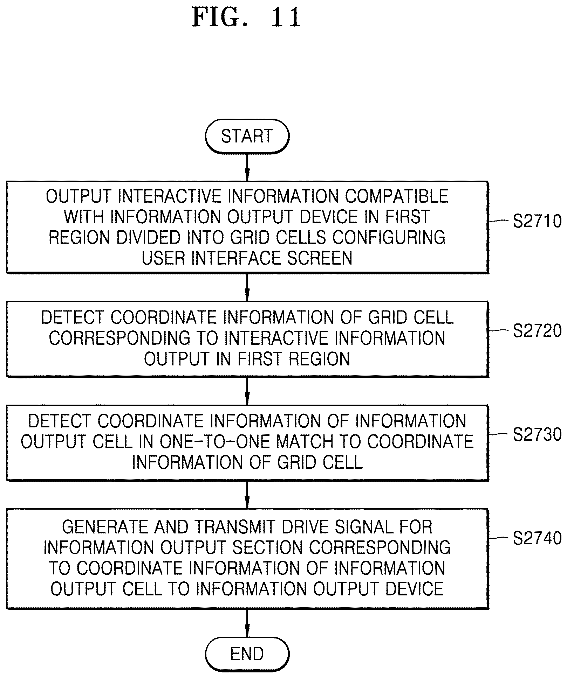

FIG. 11 is a flow diagram illustrating an interactive information processing method according to the present embodiment. In the following description, portions that are redundant with the description of FIGS. 1 to 10 will be omitted. The interactive information processing method according to the present embodiment will be described assuming that the interactive information processing device 100 performs operations in the processor 140 with assistance from peripheral components.

Referring to FIG. 11, in S1110, the processor 140 may output interactive information compatible with the information output device 200 in a first region divided into a plurality of grid cells configuring a user interface screen. In this embodiment, the interactive information may specifically include one or more files previously stored in memory, such as files previously created in the first region and stored in memory, and files captured in the first region and stored in memory. The interactive information may also include files received via communication with an external device (e.g., a server, a user terminal, etc.). Further, the interactive information may include a touch input generated by a real-time touch of the first region. Further, the interactive information may include a set of touch inputs generated by a touch of the first region until a touch signal for a print button embodied in a third region at a location different from the first region is received. Such interactive information may include one or more of graphical information and textual information.

In S1120, the processor 140 may detect coordinate information of a grid cell corresponding to the interactive information output in the first region.

In S1130, the processor 140 may detect coordinate information of an information output cell that is a one-to-one match to the coordinate information of the grid cell.

In S1140, the processor 140 may generate and transmit a drive signal for an information output section corresponding to the coordinate information of the information output cell to the information output device 200.

In this embodiment, the processor 140 may receive a touch of a grid cell display menu embodied in a second region at a location different from the first region that configures a user interface screen before outputting interactive information. The processor 140 may display a plurality of grid cells in the first region in response to the reception of a first touch signal for the grid cell display menu, and may terminate the display of the plurality of grid cells from the first region in response to the reception of a second touch signal for the grid cell display menu.

In this embodiment, the processor 140 may activate a page description window in response to the reception of a touch signal for the page description window embodied in a third region at a location different from the first region configuring the user interface screen before transmitting the drive signal to the information output device 200. The processor 140 may receive input of descriptive text for the interactive information output in the first region from the page description window. In response to the reception of a touch signal for a Braille conversion menu embodied in a second region, the processor 140 may determine the completion of reception of the descriptive text and may convert the descriptive text into Braille. The processor 140 may display the result of descriptive text converted into Braille on a Braille output window embodied in the second region. The processor 140 may transmit the Braille converted result displayed on the Braille output window to the information output device. The processor 140 may generate and transmit a drive signal for an information output section corresponding to the Braille converted result to the information output device 200.

In this embodiment, the processor 140 may receive specification information and drive information of the information output device from the information output device before transmitting the drive signal to the information output device 200. Here, the specification information and drive information associated with operation of the information output device 200 may include information about a first information output region and a second information output region configured at a different location than the first information output region. The processor 140 may generate drive signals for the information output section to output graphical information in the first information output region and to output textual information in the second information output region and transmit the drive signals to the information output device 200.

The above-mentioned embodiments of disclosure may be embodied in the form of a computer program that may be executed by various components on a computer, and such a computer program may be recorded on a computer-readable medium. Here, the medium may include magnetic media such as hard disks, floppy disks, and magnetic tapes, optical recording media such as CD-ROMs and DVDs, magneto-optical media such as floptical disks, and hardware devices specifically configured to store and execute program instructions, such as ROM, RAM, flash memory, and the like.

The computer program may be specifically designed and configured for the present disclosure or may be known and available to those skilled in the art of computer software. Examples of computer programs may include machine language codes, such as those produced by a compiler, as well as high-level language codes that may be executed by a computer using an interpreter or the like.

In the description of the disclosure (particularly in the claims), as used here, the term "the" and similar indicative terms may refer to both the singular and plural. In addition, where a range is stated in the disclosure, it is intended to include the disclosure with individual values falling within the range (unless the contrary is stated), as if each individual value configuring the range were stated in the detailed description of the disclosure.

The steps of a method according to the disclosure may be performed in any order, unless an explicit order is stated or otherwise indicated. The present disclosure is not necessarily limited to the order of the steps that is described. The use of any examples or exemplary terms (e.g., etc.) in the present disclosure is merely for the purpose of describing the disclosure in detail and is not intended to limit the scope of the disclosure by such examples or exemplary terms unless limited by the claims of the disclosure. Furthermore, those skilled in the art will recognize that various modifications, combinations, and changes may be made in accordance with design conditions and factors within the scope of the appended claims or equivalents thereof.

Accordingly, the idea of the disclosure is not to be limited to the embodiments described above, and it will be understood that not only the following claims, but also all equivalents or modifications thereof fall within the scope of the disclosure.

## Claims

1. An interactive information processing method performed by a processor of an interactive information processing device, the method comprising:
outputting interactive information compatible with an information output device that outputs tactile information in a first region divided into a plurality of grid cells configuring a user interface screen through an upward drive or a downward drive for at least one information output section;
detecting coordinate information of a grid cell corresponding to the interactive information output in the first region;
detecting coordinate information of an information output cell that is a one-to-one match to the coordinate information of the grid cell; and
generating and transmitting a drive signal for the information output section corresponding to the coordinate information of the information output cell to the information output device.

2. The method of claim 1, wherein the method comprises:
before outputting the interactive information,
receiving a touch of a grid cell display menu embodied in a second region at a location different from the first region configuring the user interface screen; and
displaying the plurality of grid cells in the first region in response to receiving a first touch signal for the grid cell display menu, and terminating the display of the plurality of grid cells from the first region in response to receiving a second touch signal for the grid cell display menu.

3. The method of claim 1, wherein
the outputting of the interactive information comprises:
opening either any one selected from one or more previously stored files, or a file received via communication with an external device in the first region and outputting the file as the interactive information,
wherein the one or more previously stored files include
at least one of a file previously generated in the first region and stored in a memory and a file captured in the first region and stored in the memory.

4. The method of claim 1, wherein
the outputting of the interactive information comprises:
outputting as interactive information any one of a touch input generated by a real-time touch of the first region and a set of touch inputs generated by a touch of the first region until a touch signal for a print button embodied in a third region at a location different from the first region is received.

5. The method of claim 3 or 4, wherein
the outputting of the interactive information comprises:
outputting the interactive information comprising at least one of the first region, graphical information, and textual information.

6. The method of claim 1, further comprising:
before transmitting the drive signal to the information output device,
activating a page description window in response to receiving a touch signal for the page description window embodied in a third region at a location different from the first region configuring the user interface screen;
receiving, from the page description window, an input of descriptive text for the interactive information output in the first region;
determining, upon receiving a touch signal for a Braille conversion menu embodied at a location different from the page description window in the third region, completion of reception of the descriptive text, and converting the descriptive text into Braille;
displaying the Braille converted result of the descriptive text on a Braille output window embodied at a location different from the Braille conversion menu in the third region; and
transmitting the Braille converted result displayed on the Braille output window to the information output device.

7. The method of claim 6, wherein
the transmitting of the drive signal to the information output unit comprises:
generating and transmitting the drive signal for the information output section corresponding to the Braille converted result to the information output device.

8. The method of claim 1, further comprising:
before transmitting the drive signal to the information output device,
receiving, from the information output device, specification information and drive information of the information output device,
wherein the specification information and drive information associated with the operation of the information output device include
information about a first information output region and a second information output region configured at a different location from the first information output region,
wherein the interactive information includes
at least one of graphical information and textual information,
wherein the transmitting the drive signal to the information output device comprises:
generating a drive signal for an information output section to output the graphical information in the first information output region, and a drive signal for the information output section to output the textual information in the second information output region, and transmitting the drive signals to the information output section.

9. A computer-readable recording medium recorded thereon a computer program for causing a computer to execute the method of any one of claims 1 to 8.

10. An interactive information processing device comprising:
a processor; and
a memory operably coupled to the processor and storing at least one code executable by the processor, the code, when executed by the processor, being configured to cause the processor to:
output interactive information compatible with an information output device that outputs tactile information in a first region divided into a plurality of grid cells configuring a user interface screen through an upward drive or a downward drive for at least one information output section;
detect coordinate information of a grid cell corresponding to the interactive information output in the first region;
detect coordinate information of an information output cell that is a one-to-one match to the coordinate information of the grid cell; and
generate and transmit a drive signal for the information output section corresponding to the coordinate information of the information output cell to the information output device.
